# EUROPEAN PATENT SPECIFICATION

(11) **EP 3 880 954 B1**
(45) Date of publication and mention of the grant of the patent: **07.06.2023**
(21) Application number: 19805532.9
(22) Date of filing: 13.11.2019
(51) Int. Cl.: F03D 1/02, F03D 13/20, F03D 80/50

(54) **MULTIROTOR WIND TURBINE COMPRISING A LOGISTICS SYSTEM**
WINDTURBINE MIT MEHREREN ROTOREN UND LOGISTIKSYSTEM
ÉOLIENNE À ROTORS MULTIPLES COMPRENANT UN SYSTÈME DE LOGISTIQUE

(30) Priority: 15.11.2018 DK PA201870748
(43) Date of publication of application: 22.09.2021
(73) Proprietor: VESTAS WIND SYSTEMS A/S, 8200 Aarhus N (DK)
(72) Inventor: BAUN, Torben Ladegaard, 8541 Skødstrup (DK); HOLTEN-MØLLER, Per, 8600 Silkeborg (DK); BØTTCHER, Peter, 8250 Egå (DK); NEUBAUER, Jesper Lykkegaard, 8543 Hornslet (DK); JØRGENSEN, Brian, 8464 Galten (DK); CHRISTOFFERSEN, Leif, 7120 Vejle Øst (DK)
(74) Representative: Vestas Patents Department
(86) International application number: PCT/DK2019/050347
(87) International publication number: WO 2020/098894

(56) References cited:
- WO-A1-2007/009464
- WO-A1-2017/178026
- US-A1- 2013 127 173
- US-A1- 2018 171 982

## Description

### FIELD OF THE INVENTION

The present invention relates to a logistics system for a multirotor wind turbine, i.e. for a wind turbine comprising two or more energy generating units. The logistics system allows equipment to be transported from a lower interior part of the tower to a given energy generating unit without moving outside the wind turbine. The invention further relates to a method for performing service to a multirotor wind turbine, using such a logistics system.

### BACKGROUND OF THE INVENTION

Wind turbines normally comprise one or more energy generating units, each energy generating unit comprising a hub carrying one or more wind turbine blades. The wind acts on the wind turbine blades, thereby causing the hub to rotate. The rotational movements of the hub are transferred to a generator, either via a gear arrangement or directly, in the case that the wind turbine is of a so-called direct drive type. In the generator, electrical energy is generated, which may be supplied to a power grid.

Some wind turbines are provided with two or more energy generating units in order to increase the total power produced by the wind turbine, without having to provide the wind turbine with one very large, and therefore heavy, energy generating unit. Such wind turbines are sometimes referred to as 'multirotor wind turbines'.

In traditional single rotor wind turbines the energy generating unit is arranged in or forms part of a nacelle mounted on top of a tower via a yaw arrangement. In this case the nacelle, and thereby the energy generating unit, can be readily accessed from an interior part of the tower by passing the yaw arrangement and entering the nacelle along a substantially vertical direction.

In multirotor wind turbines the energy generating units may be carried by a load carrying structure which is, in turn, connected to a tower. The load carrying structure may comprise arms extending from the tower, e.g. in opposite directions, and at least some of the energy generating units may be mounted on the arms, at a distance from the tower. Thereby the energy generating units are not readily accessible from an interior part of the tower. It may therefore be necessary to access the energy generating units from outside, e.g. from a helicopter or by means of hoisting from a position immediately below the energy generating unit being accessed. This is a disadvantage, in particular in the case of offshore wind turbines.

Furthermore, the available space inside a wind turbine is limited, and it may therefore be difficult to relocate equipment inside the wind turbine. It is therefore important that tools, spare parts, etc. is received in a correct order when service or maintenance is to be performed on an energy generating unit.

A multirotor wind turbine is, for example, disclosed in US 2013/127173 A1 and WO 2017/178026 A1.

### DESCRIPTION OF THE INVENTION

It is an object of embodiments of the invention to provide a logistics system for a multirotor wind turbine which allows access from the inside of the wind turbine for personnel and/or equipment to energy generating units mounted at a distance from the tower.

It is a further object of embodiments of the invention to provide a logistics system for a multirotor wind turbine which ensures the availability of required equipment for performing a scheduled service task.

According to a first aspect the invention provides a multirotor wind turbine according to claim 1.

Thus, the first aspect of the invention provides a multirotor wind turbine comprising a logistics system, the wind turbine comprising two or more energy generating units. In the present context the term 'logistics system' should be interpreted to mean a system which handles transportation of equipment and/or personnel within a multirotor wind turbine.

The multirotor wind turbine comprises a tower, two or more energy generating units and a load carrying structure. The load carrying structure comprises first and second arms extending from the tower, and the energy generating units are carried by the arms. The arms may extend from the tower along substantially opposite directions, i.e. from opposing sides of the tower. The arms may extend along directions which are substantially perpendicular to the direction of the tower, or they may extend along a direction forming an acute angle with the direction of the tower. The arms may be connected to the tower in such a manner that a line interconnecting the attachment positions of the two arms passes the tower. Alternatively, such an interconnecting line may intersect the tower.

In the present context the term 'energy generating unit' should be interpreted to mean a part of the wind turbine which actually transforms the energy of the wind into electrical energy. Each energy generating unit thereby typically comprises a rotor, carrying a set of wind turbine blades, and a generator. The energy generating unit may further comprise a gear arrangement interconnecting the rotor and the generator. The generator, and possibly the gear arrangement, may be arranged inside a nacelle.

In the present context the term 'tower' should be interpreted to mean a substantially vertical structure, similar to a tower of a traditional single rotor wind turbine.

Since the energy generating units are carried by the arms, which extend from the tower, the energy generating units may be positioned at a distance from the tower.

The logistics system comprises a transport system, a plurality of transport containers and optionally a control unit.

The transport system interconnects a lower interior part of the tower with each of the energy generating units. Thereby equipment can be transported between the lower interior part of the tower and any of the energy generating units by means of the transport system, and potentially without exiting the interior of the wind turbine. The transport system may further be used for transporting personnel, e.g. in the case of evacuation. However, normal transport of personnel may take place via a separate personnel transport system. The transport containers may be transported via an interior part of the tower and along the arms, or they may be transported directly from the lower part of the tower to a given energy generating unit, e.g. by directly hoisting the transport containers, e.g. by means of hoisting equipment arranged at the energy generating unit.

The plurality of transport containers are connectable to the transport system and configured to hold equipment to be transported. In the present context the term 'transport container' should be interpreted to mean a substantially closed unit, e.g. in the form of a box or the like, defining a hollow interior in which equipment to be transported can be accommodated. Thus, the equipment is transported in the transport containers which are in turn connected to the transport system. Accordingly, the equipment can be packed into the containers, e.g. before being shipped to the site of the multirotor wind turbine. Thereby it can easily be ensured that all required equipment for a given service task is provided at a given energy generating unit of the multirotor wind turbine. Furthermore, the transport containers protect the equipment during transport and protect the wind turbine from collisions with equipment during transport. The equipment being held in the transport containers may include tools, spare parts, etc.

The transport containers may further be used for transporting liquids, such as oil, refrigerant, hydraulic fluids and the like, to and from a service position. In this case the transport containers should preferably be hermetically sealed in order to avoid spillage during transport.

The control unit is configured to receive information regarding contents and position of the transport containers. Thereby the control unit keeps track of which equipment is being transported by which transport containers, as well as of the position of each transport container, and thereby of the equipment contained in the containers. The control unit is further configured to plan transport of the transport containers via the transport system, based on a service plan for the multirotor wind turbine.

The logistics system may be operated in the following manner. When a certain service task is required on the multirotor wind turbine, a service plan including scheduling of the task, a list of required equipment and a plan for the actual performance of the service task is generated. Based thereon, the required equipment is packed into a number of transport containers. The transport containers are packed in such a manner that equipment required for a specific step of the service task is packed together in order to ensure that everything required for performing a given step is available simultaneously.

The packed transport containers are then shipped to the site of the multirotor wind turbine, and information regarding the contents of each transport container is supplied to the control unit. The transport containers may be shipped along with transport containers holding equipment which is required for several other service tasks to be performed on the same multirotor wind turbine.

The control unit then generates a transport plan for the transport containers, including a sequence in which the transport containers need to be delivered at the relevant energy generating units, or other parts of the multirotor wind turbine where service is required. Thus, the transport plan ensures that each position of the multirotor wind turbine where service is required receives the necessary equipment for performing the service task, and in the order in which the equipment is required.

Finally, the transport containers are connected to the transport system, according to the sequence defined by the transport plan, and transported to the relevant positions of the multirotor wind turbine by means of the transport system. During this, the control unit keeps track of the whereabouts of each of the transport containers.

Thus, the control unit ensures that all equipment required for each of the service tasks to be performed is delivered timely at the positions of the service tasks, and in a relevant order which ensures that the service tasks can be performed in a smooth and time efficient manner. Furthermore, the equipment is delivered at the relevant positions without leaving the interior of the wind turbine. Thereby the service tasks can be performed regardless of the weather conditions. This makes it easier and more cost effective to plan service tasks, in particular with respect to offshore wind turbines.

The transport system may comprise rails, and the transport containers may be configured to slide along the rails. According to this embodiment, the transport containers are moved along at least a part of the transport path defined by the transport system by sliding along the rails. Thereby manual handling of the transport containers is minimised. The rails may be arranged at an elevated position, e.g. on a ceiling or the like, in which case the transport containers may be transported along the rails in a suspended manner. As an alternative, the rails may be arranged on a wall or a floor.

The movement of the transport containers along the rails may be motorised.

The transport system may comprise a lifting system configured to lift transport containers from the lower interior part of the tower to a platform arranged at a level where the arms of the load carrying structure extend from the tower. According to this embodiment, the multirotor wind turbine is provided with a platform inside the tower, at the level where the load carrying structure is mounted on the tower. Such a platform may be used for receiving transport containers, personnel, etc., and possibly storing equipment intermediately. From the platform, any of the arms can be accessed, i.e. equipment and/or personnel can be distributed to an energy generating unit mounted on either of the arms.

The lifting system may be a separate system which is arranged to only lift the transport containers. Alternatively, the lifting system may form part of or be connected to a lift for transporting personnel. In this case the transport containers may be attached to an outer surface of the lift, e.g. below the cabin or on an outer side wall of the cabin. When the transport containers are attached to a lift in this manner, the service personnel and at least one transport container are lifted towards the platform simultaneously, thereby reducing the time required for transporting service personnel and equipment to a service position. As another alternative, the lifting system may comprise a separate system as well as allowing some of the transport containers to be lifted by means of a lift for transporting personnel.

Thus, the transport containers are, in this case, lifted or hoisted along a substantially vertical direction, inside the tower, until the platform is reached. From there, the transport containers are directed towards a relevant arm and transported further on towards a relevant service position, e.g. at an energy generating unit. This part of the transportation may, e.g., take place by sliding the transport containers along rails as described above, in which case the transport containers may be hooked onto relevant rails at the platform.

A part of the transport system may, thus, be arranged in interior parts of the arms of the load carrying structure. In this case the arms may be hollow. Such a part of the transport system may advantageously include rails as described above. According to this embodiment, the transport containers remain inside the wind turbine during the entire transport.

The multirotor wind turbine further comprises a yaw arrangement allowing the load carrying structure to rotate relative to the tower.

In the present context the term 'yaw arrangement' should be interpreted to mean an arrangement which allows rotational movements of a structure relative to the tower of the wind turbine, in order to direct the rotors of the energy generating units into the incoming wind. For instance, the load carrying structure, carrying the energy generating units, may rotate relative to the tower.

The yaw arrangement comprises an outer wall part forming a closed ring extending circumferentially about an outer surface of the tower. This structure forms a space 8 between the tower 2 and the outer wall part 7. The yawing is provided during rotation of the outer wall part relative to the outer surface of the tower.

The yaw arrangement defines a passage from an interior part of the tower to an interior part of the arms through said space 8.

The transport containers may particularly be sized to allow their transportation through the passage. Correspondingly, the transport system may facilitate movement of the transport containers through the passage of the yaw arrangement. According to the invention, the transport system extends through the yaw arrangement and through said passage.

Since the transport system, according to this embodiment, extends through the yaw arrangement, it extends between structures which rotate relative to each other, e.g. in the form of the tower and the load carrying structure. The transport system may therefore comprise separate portions connected to each of these structures. A transport container being transported by means of the transport system may thereby need to be disconnected from one portion and connected to another portion of the transport system when passing through the yaw arrangement. This could, e.g., take place in an automatic or semi-automatic manner, e.g. by means of movable rail portions being operable to interconnect relevant rails when a transport container is passing, in accordance with the destination of the transport container. As an alternative, the transport containers may be moved manually between the portions of the transport system.

The yaw arrangement comprises an outer wall part arranged coaxially with the tower and forming a closed ring extending circumferentially about an outer surface of the tower, thereby forming a space between the tower and the outer wall part, the outer wall part and the outer surface of the tower being rotatable relative to each other.

According to this embodiment, the outer wall part surrounds the tower angularly, and the closed ring of the outer wall part has a larger diameter than the diameter of the tower. Thereby a space is formed between the tower and the outer wall part. The space formed in this manner is closed in the sense that it spans the entire circumference of the tower angularly. However, it is preferably possible to access the space, e.g. from an interior part of the tower, via a passage in the tower wall. The outer wall part may be a solid wall.

The outer wall part and the outer surface of the tower are rotatable relative to each other. Thereby the tower and the outer wall part forms two parts of the yaw arrangement which rotate relative to each other during yawing movements. Furthermore, the walls of the space, i.e. the tower wall and the outer wall, move relative to each other. For instance, in the case that a floor defined in the space is attached to the outer wall, a person entering the space from the interior part of the tower will enter a space where the floor is potentially moving relative to a floor defined in the interior part of the tower. Alternatively, the floor of the space may be connected to the tower, in which case it will not move relative to the floor defined in the interior part of the tower.

The arms of the load carrying structure are preferably attached to the outer wall part, thereby allowing the arms to rotate along with the outer wall part, relative to the tower, during yawing movements.

According to this embodiment, the transport system may extend through the space formed between the tower and the outer wall part. Thereby access between the interior part of the tower and the energy generating units being carried by the arms is independent of the yaw position of the yaw arrangement.

The multirotor wind turbine may further be provided with a helipad, e.g. at the top of the tower, and the transport system may further comprise a mechanism for lowering equipment, e.g. packed in transport containers, from the helipad towards a platform arranged at the level of at least one yaw arrangement. In this case some of the equipment may be delivered by means of helicopter. For instance, in the case that the multirotor wind turbine comprises two yaw arrangements, each having two arms connected thereto, equipment required for the uppermost arms may be delivered by means of helicopter and lowered towards the uppermost yaw arrangement, while equipment required for the lowermost yaw arrangement is provided from below as described above. However, it is not ruled out that equipment received at the helipad is lowered further down to the lowermost yaw arrangement.

The transport containers may be floatable. According to this embodiment, the transport containers may be towed after a seagoing vessel, such as a ship or a barge, during transport to the site of the multirotor wind turbine. This will reduce loading space requirements of the vessel used for transporting the transport containers towards the site. Furthermore, the transport containers may be dumped in water and subsequently retrieved. This could, e.g., be relevant during transfer of transport containers between a seagoing vessel and an offshore wind turbine. Floatable transport containers are particularly relevant when performing service on an offshore wind turbine. However, it is not ruled out that part of the transfer between a manufacturing site and an onshore wind turbine site takes place over water and by means of a seagoing vessel, in which case it may still be relevant to tow the transport containers in the manner described above.

The transport containers may be provided with machine readable code, and information regarding contents and position of the transport containers may be provided to the control unit by reading the machine readable code. According to this embodiment, each transport container is identified by means of a unique identifier in the form of a machine readable code. Information regarding the contents of a given transport container may be stored in the control unit along with information regarding the unique identifier. Thus, by reading the machine readable code the contents of a given transport container can readily be determined. Furthermore, by reading the machine readable code of a given transport container by means of a suitable reader arranged at a specific position, information regarding the position of the transport container can be obtained and supplied to the control unit.

The machine readable code may, e.g., be in the form of a bar code, a QR code, a transponder, or any other suitable kind of machine readable code. In the case that the machine readable code is in the form of a transponder or a similar device, the machine readable code can be read while the transport container is in motion, e.g. as it is transported by means of the transport system.

The machine readable code may be used for monitoring the movements of the transport containers when they are transported by means of the transport system. This may be performed in a continuous manner, where the exact position of a given article at any given time is obtained. As an alternative, the position of a given transport container may merely be detected when it passes a given check point along the transport path.

The transport system may comprise a mechanism which can automatically retrieve a transport container, connect it to the transport system and possibly activate the transport system to cause the transport container to be transported towards a service position. In this case the mechanism may advantageously use the machine readable code in order to identify the transport container.

Each transport container may have a size and shape which ensures that the transport container can pass from the lower interior part of the tower to a given energy generating unit by means of the transport system. According to this embodiment, it is ensured that any equipment which has been packed into a transport container will be able to reach a given energy generating unit. Thereby it is prevented that equipment gets stuck at a position between the lower interior part of the tower and a service position at an energy generating unit, possibly blocking the passage for subsequent equipment. The size and shape of the transport containers may, e.g., be selected on the basis of the narrowest parts of the transport path defined by the transport system.

The transport containers may be provided with a climate conditioning system for maintaining a certain temperature and/or humidity inside the transport containers. In this case the transport containers may further be provided with a battery and/or may be connectable to a power supply at the multirotor wind turbine in order to power the climate conditioning system. This may, e.g., be advantageous in the case that the transport containers are transported to the site of the multirotor wind turbine and intermediately stored there, possibly for weeks or months, before the service is performed. In this case the climate conditioning system protects the equipment packed in the transport containers from extreme temperatures and/or humidity levels during the intermediate storage.

According to a second aspect the invention provides a method for performing service on a multirotor wind turbine according to the first aspect of the invention, the method comprising the steps of:
- packing equipment in two or more transport containers, based on a kind of service to be performed,
- moving the transport containers to a site of the multirotor wind turbine,
- determining a transporting sequence of the transport containers, based on the contents of the transport containers, and corresponding to an order in which it is required to receive the contents of the transport containers at an energy generating unit,
- transporting the transport containers from a lower interior part of the tower to an energy generating unit of the multirotor wind turbine by means of the transport system of the multirotor wind turbine, and in accordance with the determined transporting sequence, and
- performing service at the energy generating unit, using the equipment contained in the transport containers.

The second aspect of the invention provides a method for performing service on a multirotor wind turbine according to the first aspect of the invention, i.e. on a multirotor wind turbine comprising a logistics system according to the first aspect of the invention. It should therefore be noted that a person skilled in the art would readily recognise that any feature described in combination with the first aspect of the invention could also be combined with the second aspect of the invention, and vice versa.

According to the method of the second aspect of the invention, equipment is initially packed in two or more transport containers, based on a kind of service to be performed. This has already been described above with reference to the first aspect of the invention.

Next, the transport containers are moved to a site of the multirotor wind turbine. As described above, this could include moving the transport containers across water, e.g. on a seagoing vessel and/or by towing floatable transport containers behind a seagoing vessel. Alternatively or additionally, the transport containers could be moved by means of a land vessel, such as a truck or by rail.

Next, a transporting sequence of the transport containers is determined, based on the contents of the transporting containers, and corresponding to an order in which it is required to receive the contents of the transporting containers at an energy generating unit. As described above, it can thereby be ensured that all equipment required in order to perform a certain service step is available at the energy generating unit when the service step is to be performed.

The transport containers are then transported from a lower interior part of the tower to an energy generating unit of the multirotor wind turbine by means of the transporting system of the multirotor wind turbine, and in accordance with the determined transporting sequence. Thereby the equipment is actually delivered at the energy generating unit in the order which ensures that the relevant equipment is available when a given service step is to be performed.

Finally, the service is performed at the energy generating unit.

The method may further comprise the steps of:
- after the step of performing service at the energy generating unit, packing equipment in the two or more transport containers, and
- transporting the transport containers from the energy generating unit to the lower interior part of the tower by means of the transport system.

According to this embodiment, the transport containers are reused for returning equipment, e.g. in the form of tools and/or components which have been replaced by spare parts, to the lower interior part of the tower. The remarks set forth above regarding transporting equipment from the lower interior part of the tower to the energy generating unit are equally applicable here.

### BRIEF DESCRIPTION OF THE DRAWINGS

The invention will now be described in further detail with reference to the accompanying drawings in which
Fig. 1 is a schematic view of a multirotor wind turbine according to an embodiment of the invention,
Figs. 2-5 illustrate a yaw arrangement for a multirotor wind turbine according to an embodiment of the invention,
Fig. 6 shows an outer wall part for the yaw arrangement of Figs. 2-5,
Figs. 7 and 8 are perspective views of two transport containers for a logistics system according to an embodiment of the invention, and
Figs. 9-31 illustrate method steps of a method for performing service according to an embodiment of the invention.

### DETAILED DESCRIPTION OF THE DRAWINGS

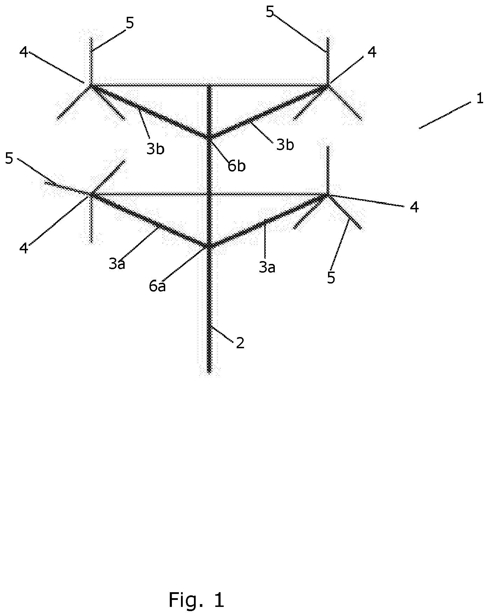

Fig. 1 is a schematic view of a multirotor wind turbine 1 according to an embodiment of the invention. The wind turbine 1 comprises a tower 2 and two load carrying structures, each comprising two arms 3 extending away from the tower 2 along substantially opposite directions. Each arm 3 carries an energy generating unit 4 with three wind turbine blades 5.

The load carrying structures 3 are connected to the tower 2 via two separate yaw arrangements 6, thereby allowing the lower set of arms 3a to perform yawing movements relative to the tower 2 independently of yawing movements of the upper set of arms 3b relative to the tower.

In traditional single rotor wind turbines, a nacelle carrying the single rotor of the wind turbine is normally connected directly to the top of the tower. Thereby the nacelle and the rotor can readily be accessed via the interior of the tower.

However, in the multirotor wind turbine 1 of Fig. 1 the energy generating units 4 are mounted on the arms 3 at a distance from the tower 2. Thereby the energy generating units 4 are not directly accessible from the interior of the tower 2. Instead, they may be accessed from the outside, e.g. via hoisting from a position immediately below a relevant energy generating unit 4, or from above via a helicopter. In the multirotor wind turbine 1 according to the invention, the energy generating units 4 can be accessed from the interior of the tower 2 by means of a passage extending through a relevant yaw arrangement 6 and an interior part of a relevant arm 3. This will be described in further detail below. The multirotor wind turbine 1 is provided with a logistics system according to an embodiment of the invention. This will also be described in further detail below.

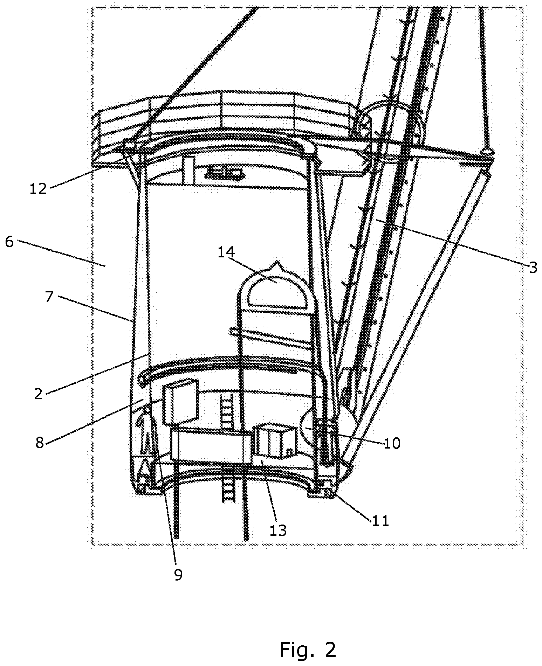

Fig. 2 is a cross sectional view of a yaw arrangement 6 for a multirotor wind turbine according to an embodiment of the invention. The yaw arrangement 6 comprises an outer wall part 7 arranged circumferentially about an outer surface of the tower 2. Thereby a space 8 is formed between the tower 2 and the outer wall part 7. The space 8 can be accessed from the interior part of the tower 2 via a passage 9.

Two arms 3, one of which is shown, are attached to the outer wall part 7 and extend in a direction away from the yaw arrangement 6 and the tower 2. The arms 3 are hollow, and the interior of each arm 3 can be accessed from the space 8 formed between the tower 2 and the outer wall part 7 via a passage 10. Thus, an energy generating unit mounted on an arm 3, essentially as illustrated in Fig. 1, can be accessed from the interior of the tower 2 via an access path extending through passage 9, space 8, passage 10 and the interior of the arm 3. This allows access between the interior of the tower 2 and the interior of the arm 3, regardless of the yaw position of the yaw arrangement 6.

The outer wall part 7 is connected to the tower 2 by means of a first bearing 11 and a second bearing 12. Thereby the outer wall part 7 can rotate relative to the tower 2 in order to orientate rotors of the energy generating units mounted on the arms 3 in accordance with the incoming wind. Accordingly, the access path described above extends across parts which are capable of performing rotational movements relative to each other.

The first bearing 11 interconnects a lower part of the outer wall part 7 and the tower 2, and the second bearing 12 interconnects an upper part of the outer wall part 7 and the tower 2. Thereby the extremities of the outer wall part 7 are each supported against the tower 2 by means of a bearing 11, 12, thereby stabilising the structure. The first bearing 11 is configured to handle axial loads as well as radial loads, whereas the second bearing 12 is configured to handle radial loads, but not axial loads. Thereby the axial loads are handled by the bearing 11 on which the outer wall part 7 rests, and the position where the highest axial loads are expected.

A platform 13 is arranged in the interior of the tower 2 at a vertical level corresponding to the position of the yaw arrangement 6. At the platform 13, equipment as well as personnel can be received and intermediately stored. For instance, equipment may be hoisted to the platform 13 from a lower interior part of the tower 2, using a hoisting arrangement 14. Once received at the platform 13, the equipment can be moved into the space 8 defined between the tower 2 and the outer wall 7, via opening 9. From there, the equipment can be moved into the interior of a relevant arm 3, via opening 10, and be moved inside the arm 3 to a relevant energy generating unit. Equipment may also be moved in the opposite direction from an energy generating unit to the lower interior part of the tower 2, via the platform 13.

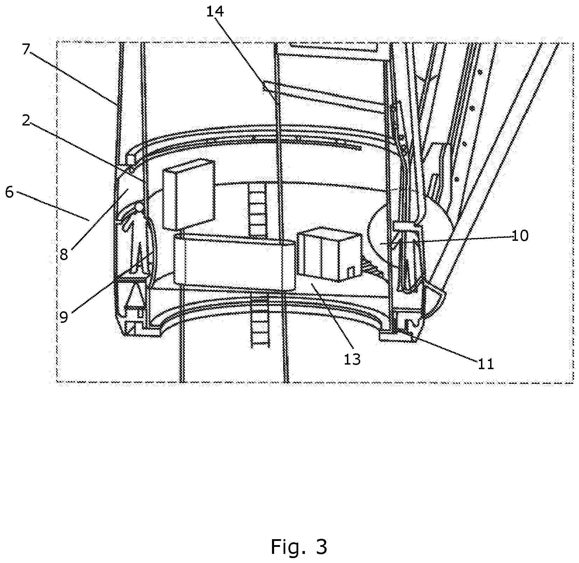

Fig. 3 is a detail of the yaw arrangement 6 of Fig. 2. In Fig. 3 the passage 9 between the interior part of the tower 2 and the space 8 defined between the tower 2 and the outer wall 7 can be seen more clearly than in Fig. 2.

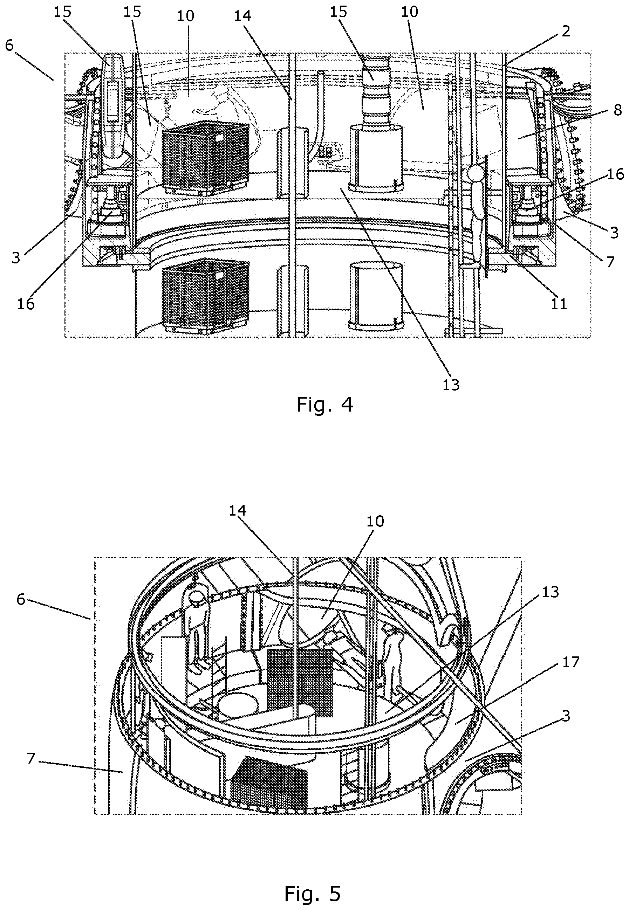

Fig. 4 is a cross sectional view of a part of a yaw arrangement 6 for a multirotor wind turbine according to an embodiment of the invention. Similarly to the embodiment shown in Figs. 2 and 3, the yaw arrangement 6 comprises an outer wall part 7 arranged circumferentially about the tower 2, thereby forming a space 8 there between.

In the embodiment of Fig. 4 the outer wall part 7 comprises a casted section onto which the arms 3 are attached, and one or more further sections arranged above the casted section and being attached to the casted section. In Fig. 4 only the casted section is shown. Thereby the part of the outer wall part 7 where the arms 3 are attached is stronger than the remaining part of the outer wall part 7. Accordingly, the manufacturing costs of the outer wall part 7 are minimised without compromising the strength of the outer wall part 7.

Fig. 4 further illustrates equipment being transported inside the wind turbine in transport containers 15. The transport containers 15 have a size and a shape which ensures that the transport containers 15 can be moved from a position at the lower interior part of the tower 2 to an energy generating unit mounted on one of the arms 3. Thereby it is ensured that equipment packed in one of the transport containers 15 will actually be able to reach a destination at an energy generating unit, without risking that the equipment gets stuck.

In Fig. 4 it can further be seen that the yaw arrangement 6 is provided with a plurality of yaw drives 16 configured for driving the yawing movements of the outer wall part 7 relative to the tower 2.

Fig. 5 is a perspective view of the yaw arrangement 6 of Fig. 4. Fig. 5 illustrates that the transport system used for transporting equipment between the lower interior part of the tower 2 and the energy generating unit may also be used for transporting personnel. This could, e.g., be relevant in the case that personnel needs to be evacuated from the wind turbine.

In Fig. 5 it can further be seen that the casted section of the outer wall part 7 is provided with a reinforcement flange 17. The reinforcement flange 17 does not extend the entire circumference of the casted section. Instead, it is positioned in the part of the casted section where the arms 3 are attached, i.e. in the part where the highest loads are expected, and where additional strength is therefore needed. Accordingly, improved strength is obtained with minimal material use.

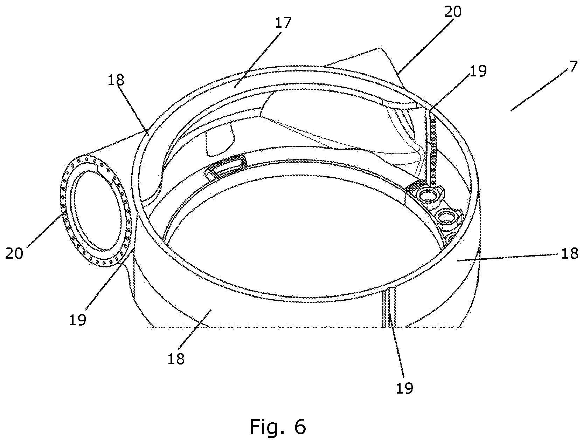

Fig. 6 is a perspective view of a casted section of the outer wall part 7 shown in Figs. 5 and 6. The casted section is formed by three segments 18, each spanning an angle of approximately 120°, the segments 18 being joined to each other by means of bolt connections 19. One of the segments 18 includes the reinforcement flange 17 and interface portions 20 for attaching the arms to the outer wall part 7.

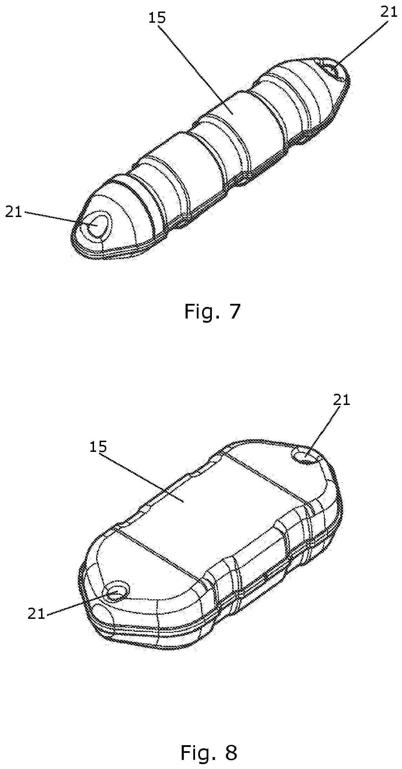

Figs. 7 and 8 are perspective views of two different transport containers 15 for a logistics system according to an embodiment of the invention. The transport container 15 of Fig. 7 has a size and shape which differs from the size and shape of the transport container 15 of Fig. 8. Thereby equipment which may be accommodated in the transport container 15 of Fig. 7 may not be accommodated in the transport container 15 of Fig. 8, and vice versa. However, both of the transport containers 15 have outer dimensions which ensure that they can pass from a lower interior part of a tower of a multirotor wind turbine to each of the energy generating units of the multirotor wind turbine, in the manner described above. Furthermore, the transport containers 15 provide a standardized manner of transporting equipment in a multirotor wind turbine.

The transport containers 15 are in the form of closed containers with a hard outer surface. Thereby the equipment being transported by means of the transport containers 15 is protected during transport.

The transport containers 15 are provided with eyelets 21 for connecting the transport containers 15 to a transport system, e.g. via hooks, pulleys, etc. Accordingly, the eyelets 21 provide a standardized interface between equipment being transported and the transport system.

The transport containers 15 may be made from a material which allows them to float, even if equipment is accommodated therein. This will allow the transport containers 15 to be dragged behind a seagoing vessel in a self-floating manner, thereby reducing the requirements with regard to storage space on the seagoing vessel.

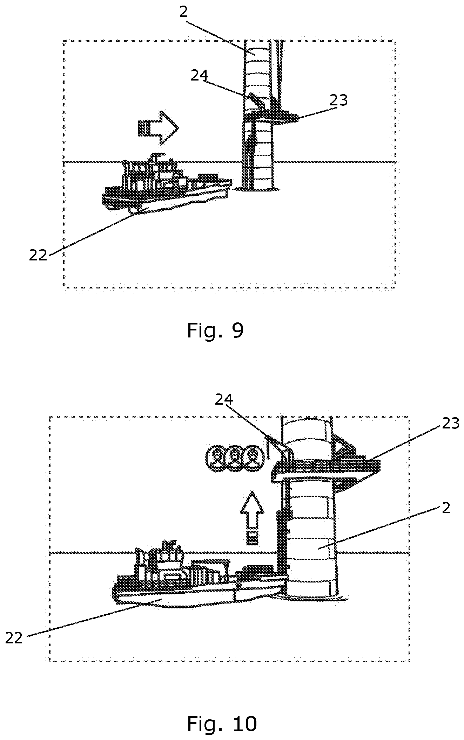

Figs. 9-31 illustrate method steps of a method for performing service on a multirotor wind turbine according to an embodiment of the invention.

In Fig. 9 a seagoing vessel 22 is arriving at a multirotor wind turbine positioned at an offshore site. The lowermost part of the tower 2 of the multirotor wind turbine can be seen, and a transition platform 23 carrying a crane 24 is arranged on the tower 2.

In Fig. 10 the seagoing vessel 22 is moored at the multirotor wind turbine, and personnel is in the process of being transferred from the seagoing vessel 22 to the transition platform 23.

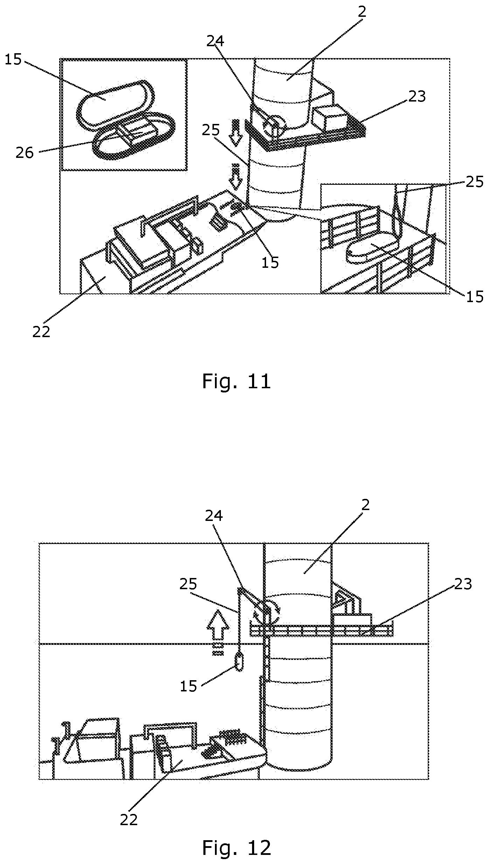

Fig. 11 illustrates a hoisting wire 25 being lowered from the transition platform 23 towards the seagoing vessel 22 by means of the crane 24, and the hoisting wire 25 being attached to a transport container 15 arranged on the seagoing vessel 22, the transport container 15 accommodating equipment 26 which has previously been packed into the transport container 15.

In Fig. 12 the transport container 15 is being hoisted from the seagoing vessel 22 towards the transition platform 23 by means of the crane 24.

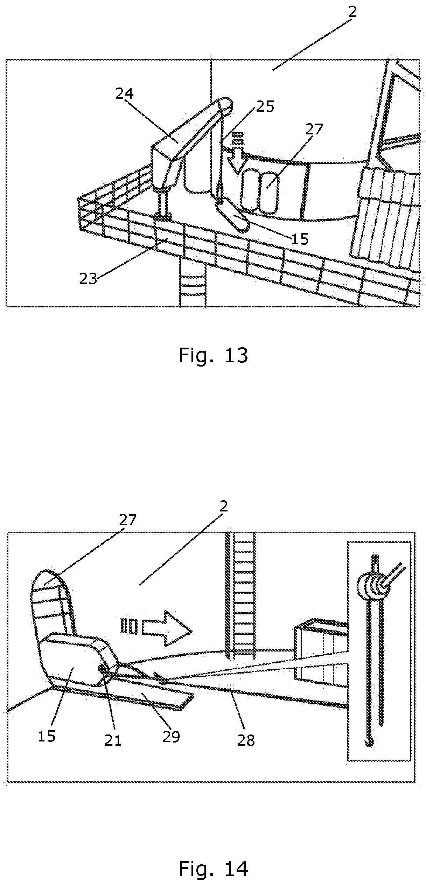

In Fig. 13 the transport container 15 has arrived at the transition platform 23, and the crane 24 is in the process of lowering the transport container 15 onto the transition platform 23, adjacent to an opening 27 formed in the wall of the tower 2.

In Fig. 14 the transport container 15 has been connected to a transport system arranged inside the multirotor wind turbine via a wire 28, and the transport container 15 is in the process of being pulled through the opening 27 formed in the wall of the tower 2 by means of the transport system pulling the wire 28. Accordingly, the transport container 15 is entering a lower interior part of the tower 2. It can be seen that the transport container 15 has been connected to the wire 28 via the eyelet 21.

A protective surface 29 is arranged on the floor, allowing the transport container 15 to slide along the floor without causing damage thereto.

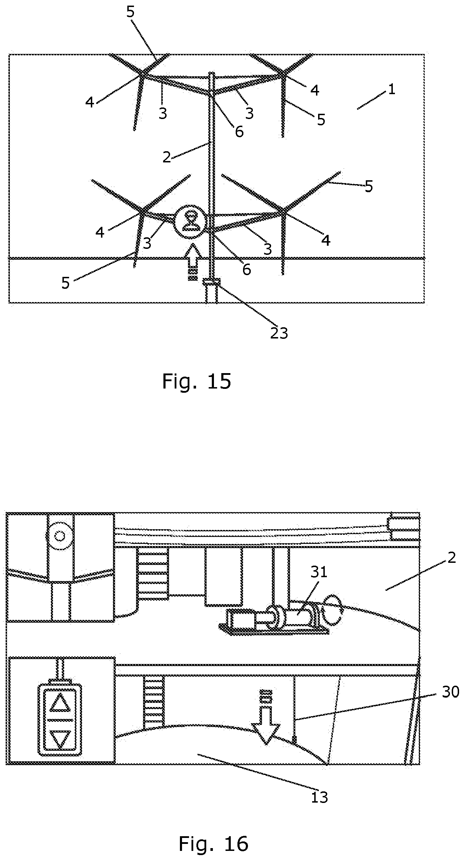

Fig. 15 illustrates that personnel is being hoisted from the lower interior part of the tower 2 to a platform arranged at a level corresponding to the position of a lowermost yaw arrangement 6.

In Fig. 16 a hoisting wire 30 is being lowered from the platform 13 towards the lower interior part of the tower 2 by means of a winch 31.

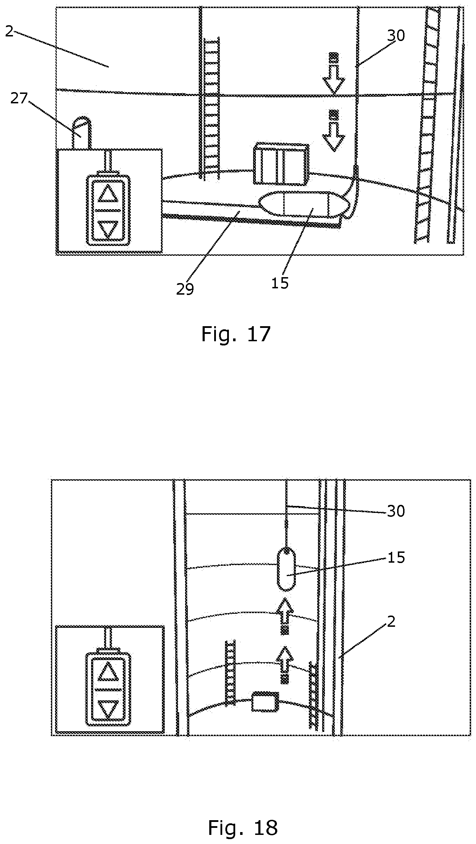

In Fig. 17 the hoisting wire 30 has reached the lower interior part of the tower 2 and is in the process of being attached to the transport container 15, which was previously moved into the lower interior part of the tower 2.

In Fig. 18 the transport container 15 is being hoisted from the lower interior part of the tower 2 towards the platform (not shown) by means of the hoisting wire 30 and the winch (not shown).

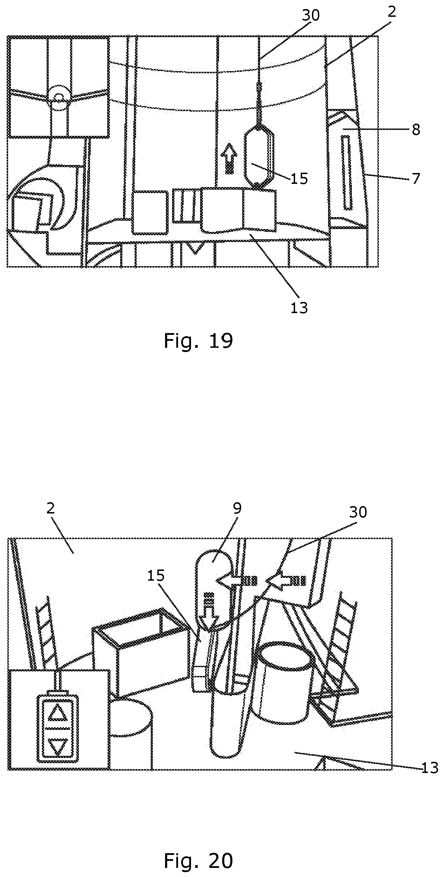

In Fig. 19 the transport container 15 has reached the platform 13 and is about to be lowered onto the platform 13.

In Fig. 20 the transport container 15 has been lowered onto the platform 13 and is about to be released from the hoisting wire 30.

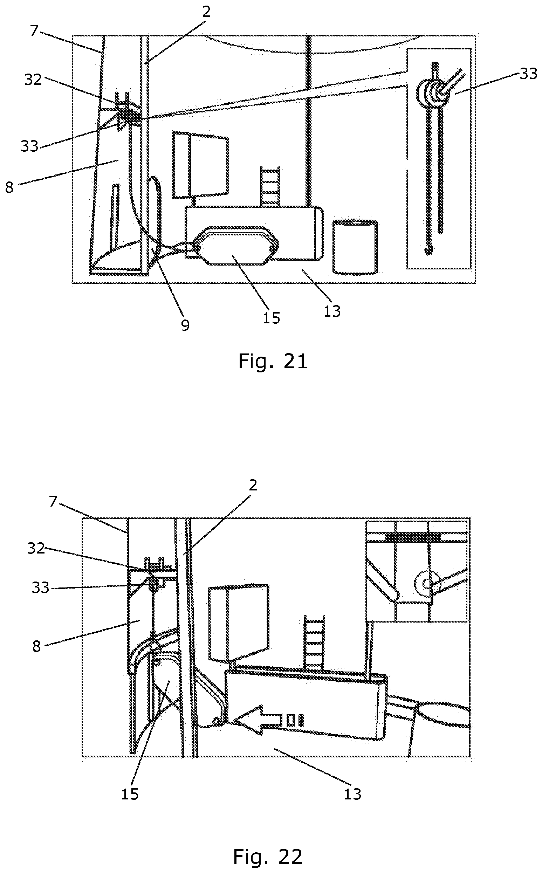

In Fig. 21 the transport container 15 has been connected to a rail system 32 arranged in the space 8 formed between the tower 2 and the outer wall part 7, by means of a chain hoist 33. The transport container 15 can thereby be pulled through the passage 9 and into the space 8 using the chain hoist 33.

In Fig. 22 the transport container 15 is in the process of being pulled through the passage 9 in the manner described above.

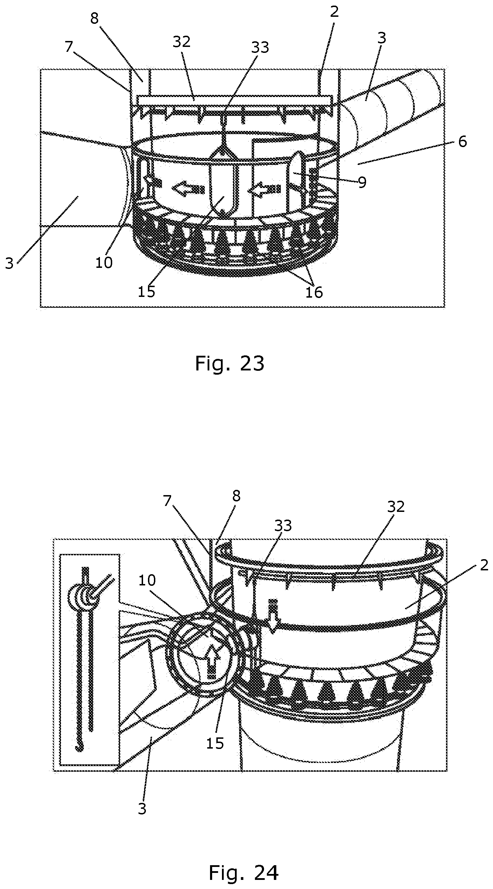

In Fig. 23 the transport container 15 has been pulled completely through the passage 9 and is now arranged in the space 8 and is suspended from the rail system 32. The transport container 15 is in the process of being transported inside the space 8 from the passage 9 towards a passage 10 interconnecting the space 8 and the interior of one of the arms 3.

In Fig. 24 the transport container 15 has reached the passage 10 and is in the process of being lowered from the rail system 32.

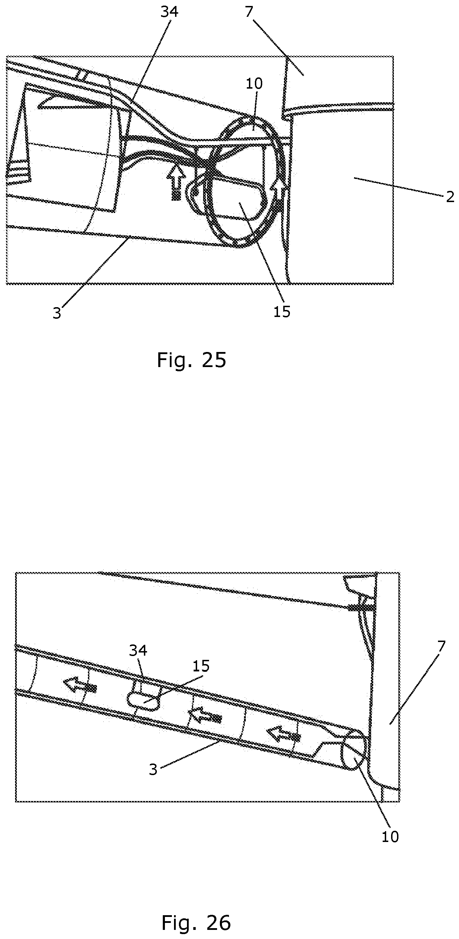

In Fig. 25 the transport container 15 has been connected to another rail system 34 arranged in the interior part of the arm 3.

In Fig. 26 the transport container 15 is in the process of being moved from the passage 10 towards an energy generating unit (not shown) being carried by the arm 3, by means of the rail system 34. Thus, the transport container 15 is being moved inside the arm 3.

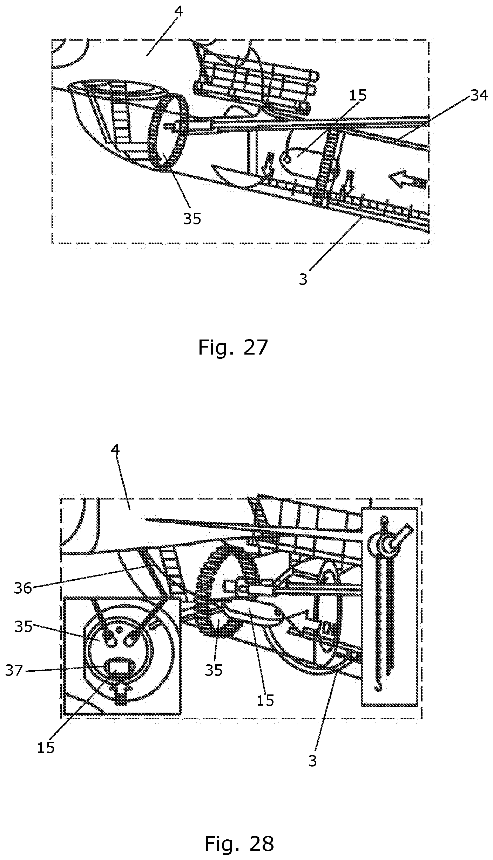

In Fig. 27 the transport container 15 has reached a position immediately before a fire door 35 which is arranged near an entrance to the energy generating unit 4 being carried by the arm 3. The transport container 15 is about to be lowered from the rail system 34.

In Fig. 28 the transport container 15 has been connected to a hoisting wire 36 forming part of a hoisting system arranged in the energy generating unit 4. The transport container 15 is in the process of being pulled through an opening 37 in the fire door 35 by means of the hoisting wire 36.

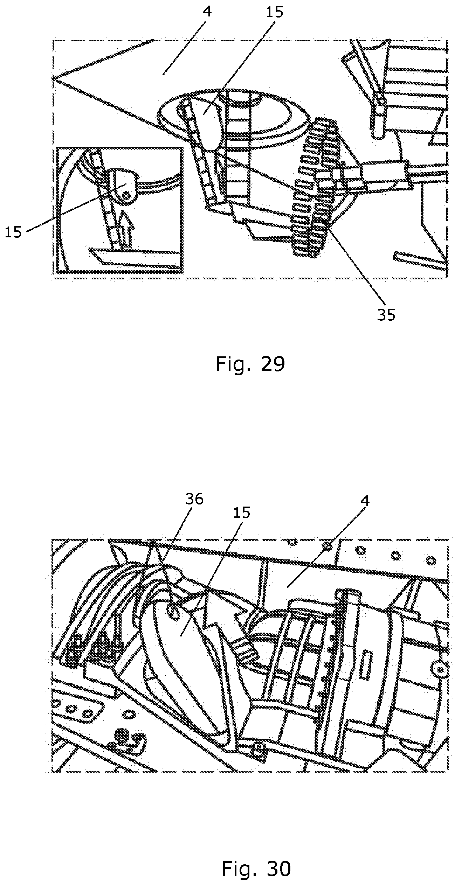

In Fig. 29 the transport container 15 is in the process of being pulled further into the energy generating unit 4.

Fig. 30 shows the transport container 15 entering the interior of the energy generating unit 4.

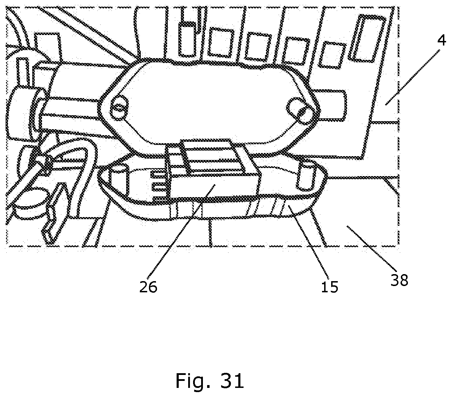

In Fig. 31 the transport container 15 is arranged on a floor 38 inside the energy generating unit 4 and has been released from the hoisting wire. The transport container 15 has been opened, thereby allowing access to equipment 26 which has been transported inside the transport container 15. Accordingly, the equipment 26 can now be used for performing a schedule service task at the energy generating unit 4.

## Claims

1. A multirotor wind turbine (1) comprising a tower (2), two or more energy generating units (4), a load carrying structure comprising first and second arms (3) extending from the tower (2), the energy generating units (4) being carried by the arms (3), a yaw arrangement (6) allowing the load carrying structure to rotate relative to the tower (2), and a logistics system, the logistics system comprising:
- a transport system (14, 30, 31, 32, 33, 34, 36) interconnecting a lower interior part of the tower (2) with each of the energy generating units (4), thereby allowing equipment (26) to be transported between the lower interior part of the tower (2) and each energy generating unit (4), and
- a plurality of transport containers (15) being connectable to the transport system (14, 30, 31, 32, 33, 34, 36) and being configured to hold equipment (26) to be transported,
wherein the yaw arrangement (6) comprises an outer wall part (7) forming a closed ring extending circumferentially about an outer surface of the tower (2), thereby forming a space (8) between the tower (2) and the outer wall part (7), the outer wall part (7) and the outer surface of the tower (2) being rotatable relative to each other, wherein the yaw arrangement (6) defines a passage from an interior part of the tower (2) to an interior part of the arms (3) through the space (8), and wherein the transport system (14, 30, 31, 32, 33, 34, 36) extends through the yaw arrangement (6) via the passage.

2. The multirotor wind turbine (1) according to claim 1, wherein the logistics system comprises:
- a control unit being configured to receive information regarding contents and position of the transport containers (15), and to plan transport of the transport containers (15) via the transport system (14, 30, 31, 32, 33, 34, 36), based on a service plan for the multirotor wind turbine (1).

3. The multirotor wind turbine (1) according to claim 1 or 2, wherein the transport system comprises rails (32, 34), and wherein the transport containers (15) are configured to slide along the rails (32, 34).

4. The multirotor wind turbine (1) according to any of the preceding claims, wherein the transport system comprises a lifting system (14, 30, 31) configured to lift transport containers (15) from the lower interior part of the tower (2) to a platform (13) arranged at a level where the arms (3) of the load carrying structure extend from the tower (2).

5. The multirotor wind turbine (1) according to any of the preceding claims, wherein a part of the transport system (14, 30, 31, 32, 33, 34, 36) is arranged in interior parts of the arms (3) of the load carrying structure.

6. The multirotor wind turbine (1) according to any of the preceding claims, wherein the transport containers are sized to allow their transportation through the passage, and wherein the transport system (14, 30, 31, 32, 33, 34, 36) facilitates movement of the transport containers through the passage of the yaw arrangement (6).

7. The multirotor wind turbine (1) according to any of the preceding claims, wherein the transport containers (15) are floatable.

8. The multirotor wind turbine (1) according to any of the preceding claims, wherein the transport containers (15) are provided with machine readable code, and wherein information regarding contents and position of the transport containers (15) can be provided to a control unit by reading the machine readable code.

9. The multirotor wind turbine (1) according to any of the preceding claims, wherein each transport container (15) has a size and shape which ensures that the transport container (15) can pass from the lower interior part of the tower (2) to a given energy generating unit (4) by means of the transport system (14, 30, 31, 32, 33, 34, 36).

10. A method for performing service on a multirotor wind turbine (1) according to any of the preceding claims, the method comprising the steps of:
- packing equipment (26) in two or more transport containers (15), based on a kind of service to be performed,
- moving the transport containers (15) to a site of the multirotor wind turbine (1),
- determining a transporting sequence of the transport containers (15), based on the contents of the transport containers (15), and corresponding to an order in which it is required to receive the contents of the transport containers (15) at an energy generating unit (4),
- transporting the transport containers (15) from a lower interior part of the tower (2) to an energy generating unit (4) of the multirotor wind turbine (1) by means of the transport system (14, 30, 31, 32, 33, 34, 36) of the multirotor wind turbine (1), and in accordance with the determined transporting sequence, and
- performing service at the energy generating unit (4), using the equipment (26) contained in the transport containers (15).

11. The method according to claim 10, further comprising the steps of:
- after the step of performing service at the energy generating unit (4), packing equipment (26) in the two or more transport containers (15), and
- transporting the transport containers (15) from the energy generating unit (4) to the lower interior part of the tower (2) by means of the transport system (14, 30, 31, 32, 33, 34, 36).

## Patentansprüche

1. Multirotor-Windkraftanlage (1) umfassend einen Turm (2), zwei oder mehr Energieerzeugungseinheiten (4), eine lasttragende Struktur umfassend erste und zweite Arme (3), die sich von dem Turm (2) weg erstrecken, wobei die Energieerzeugungseinheiten (4) von den Armen (3) getragen werden, eine Gieranordnung (6), die es der lasttragenden Struktur ermöglicht, sich relativ zu dem Turm (2) zu drehen, und ein Logistiksystem, wobei das Logistiksystem umfasst:
- ein Transportsystem (14, 30, 31, 32, 33, 34, 36), das einen unteren inneren Teil des Turms (2) mit jeder der Energieerzeugungseinheiten (4) verbindet, wodurch der Transport von Ausrüstung (26) zwischen dem unteren inneren Teil des Turms (2) und jeder Energieerzeugungseinheit (4) ermöglicht wird, und
- eine Vielzahl von Transportbehältern (15), die mit dem Transportsystem (14, 30, 31, 32, 33, 34, 36) verbindbar sind und zur Aufnahme von zu transportierender Ausrüstung (26) ausgelegt sind,
wobei die Gieranordnung (6) einen Außenwandteil (7) umfasst, der einen geschlossenen Ring bildet, der sich in Umfangsrichtung um eine Außenfläche des Turms (2) erstreckt,
wodurch ein Raum (8) zwischen dem Turm (2) und dem Außenwandteil (7) gebildet wird, wobei der Außenwandteil (7) und die Außenfläche des Turms (2) relativ zueinander drehbar sind, wobei die Gieranordnung (6) einen Durchgang von einem inneren Teil des Turms (2) zu einem inneren Teil der Arme (3) durch den Raum (8) definiert, und wobei sich das Transportsystem (14, 30, 31, 32, 33, 34, 36) durch die Gieranordnung (6) über den Durchgang erstreckt.

2. Multirotor-Windkraftanlage (1) nach Anspruch 1, wobei das Logistiksystem umfasst:
- eine Steuereinheit, die ausgelegt ist, um Informationen über den Inhalt und die Position der Transportbehälter (15) zu empfangen und den Transport der Transportbehälter (15) über das Transportsystem (14, 30, 31, 32, 33, 34, 36) basierend auf einem Wartungsplan für die Multirotor-Windkraftanlage (1) zu planen.

3. Multirotor-Windkraftanlage (1) nach Anspruch 1 oder 2, wobei das Transportsystem Schienen (32, 34) umfasst, und wobei die Transportbehälter (15) ausgelegt sind, um entlang der Schienen (32, 34) gleiten.

4. Multirotor-Windkraftanlage (1) nach einem der vorstehenden Ansprüche, wobei das Transportsystem ein Hebesystem (14, 30, 31) umfasst, das ausgelegt ist, um Transportbehälter (15) von dem unteren inneren Teil des Turms (2) zu einer Plattform (13) anzuheben, die auf einer Höhe angeordnet ist, auf der die Arme (3) der lasttragenden Struktur sich vom Turm (2) weg erstrecken.

5. Multirotor-Windkraftanlage (1) nach einem der vorstehenden Ansprüche, wobei ein Teil des Transportsystems (14, 30, 31, 32, 33, 34, 36) in inneren Teilen der Arme (3) der lasttragenden Struktur angeordnet ist.

6. Multirotor-Windkraftanlage (1) nach einem der vorstehenden Ansprüche, wobei die Transportbehälter so bemessen sind, dass sie durch den Durchgang transportiert werden können, und wobei das Transportsystem (14, 30, 31, 32, 33, 34, 36) die Bewegung der Transportbehälter durch den Durchgang der Gieranordnung (6) erleichtert.

7. Multirotor-Windkraftanlage (1) nach einem der vorstehenden Ansprüche, wobei die Transportbehälter (15) schwimmfähig sind.

8. Multirotor-Windkraftanlage (1) nach einem der vorstehenden Ansprüche, wobei die Transportbehälter (15) mit einem maschinenlesbaren Code bereitgestellt sind, und wobei Informationen über den Inhalt und die Position der Transportbehälter (15) durch Lesen des maschinenlesbaren Codes an eine Steuereinheit bereitgestellt werden können.

9. Multirotor-Windkraftanlage (1) nach einem der vorstehenden Ansprüche, wobei jeder Transportbehälter (15) eine Größe und Form aufweist, die sicherstellt, dass der Transportbehälter (15) mittels des Transportsystems (14, 30, 31, 32, 33, 34, 36) vom unteren Innenteil des Turms (2) zu einer bestimmten Energieerzeugungseinheit (4) gelangen kann.

10. Verfahren zur Durchführung von Wartung an einer Multirotor-Windkraftanlage (1) nach einem der vorstehenden Ansprüche, wobei das Verfahren die Schritte umfasst von:
- Verpacken der Ausrüstung (26) in zwei oder mehr Transportbehälter (15) basierend auf der Art der durchzuführenden Wartung,
- Bewegen der Transportbehälter (15) zu einem Standort der Multirotor-Windkraftanlage (1),
- Bestimmen einer Transportreihenfolge der Transportbehälter (15), die auf dem Inhalt der Transportbehälter (15) basiert und einer Reihenfolge entspricht, in der es erforderlich ist, den Inhalt der Transportbehälter (15) an einer Energieerzeugungseinheit (4) zu empfangen,
- Transportieren der Transportbehälter (15) von einem unteren Innenteil des Turms (2) zu einer Energieerzeugungseinheit (4) der Multirotor-Windkraftanlage (1) mittels des Transportsystems (14, 30, 31, 32, 33, 34, 36) der Multirotor-Windkraftanlage (1) und gemäß der bestimmten Transportreihenfolge, und
- Durchführen von Wartung an der Energieerzeugungseinheit (4) unter Verwendung der in den Transportbehältern (15) enthaltenen Ausrüstung (26).

11. Verfahren nach Anspruch 10, weiter umfassend die Schritte von:
- nach dem Schritt der Durchführung von Wartung an der Energieerzeugungseinheit (4), Verpacken der Ausrüstung (26) in die zwei oder mehr Transportbehälter (15), und
- Transportieren der Transportbehälter (15) von der Energieerzeugungseinheit (4) zum unteren Innenteil des Turms (2) mit Hilfe des Transportsystems (14, 30, 31, 32, 33, 34, 36).

## Revendications

1. Eolienne à rotors multiples (1) comprenant une tour (2), deux unités de génération d'énergie (4) ou plus, une structure porteuse de charge comprenant des premier et second bras (3) s'étendant depuis la tour (2), les unités de génération d'énergie (4) étant portées par les bras (3), un agencement de lacet (6) permettant à la structure porteuse de charge de tourner par rapport à la tour (2), et un système de logistique, le système de logistique comprenant :
- un système de transport (14, 30, 31, 32, 33, 34, 36) interconnectant une partie intérieure inférieure de la tour (2) avec chacune des unités de génération d'énergie (4), permettant ainsi à de l'équipement (26) d'être transporté entre la partie intérieure inférieure de la tour (2) et chaque unité de génération d'énergie (4), et
- une pluralité de conteneurs de transport (15) pouvant être reliés au système de transport (14, 30, 31, 32, 33, 34, 36) et étant configurés pour contenir l'équipement (26) à transporter,
dans laquelle l'agencement de lacet (6) comprend une partie paroi extérieure (7) formant une bague fermée s'étendant circonférentiellement autour d'une surface extérieure de la tour (2),
formant de ce fait un espace (8) entre la tour (2) et la partie paroi extérieure (7), la partie paroi extérieure (7) et la surface extérieure de la tour (2) pouvant tourner l'une par rapport à l'autre, dans laquelle l'agencement de lacet (6) définit un passage depuis une partie intérieure de la tour (2) jusqu'à une partie intérieure des bras (3) à travers l'espace (8), et dans laquelle le système de transport (14, 30, 31, 32, 33, 34, 36) s'étend à travers l'agencement de lacet (6) via le passage.

2. Eolienne à rotors multiples (1) selon la revendication 1, dans laquelle le système de logistique comprend :
- une unité de commande configurée pour recevoir des informations concernant le contenu et la position des conteneurs de transport (15), et pour planifier le transport des conteneurs de transport (15) via le système de transport (14, 30, 31, 32, 33, 34, 36), sur la base d'un plan de service pour l'éolienne à rotors multiples (1).

3. Eolienne à rotors multiples (1) selon la revendication 1 ou 2, dans laquelle le système de transport comprend des rails (32, 34), et dans laquelle les conteneurs de transport (15) sont configurés pour coulisser le long des rails (32, 34).

4. Eolienne à rotors multiples (1) selon l'une quelconque des revendications précédentes, dans laquelle le système de transport comprend un système de levage (14, 30, 31) configuré pour lever les conteneurs de transport (15) depuis la partie intérieure inférieure de la tour (2) jusqu'à une plateforme (13) agencée à un niveau où les bras (3) de la structure porteuse de charge s'étendent depuis la tour (2).

5. Eolienne à rotors multiples (1) selon l'une quelconque des revendications précédentes, dans laquelle une partie du système de transport (14, 30, 31, 32, 33, 34, 36) est agencée dans des parties intérieures des bras (3) de la structure porteuse de charge.

6. Eolienne à rotors multiples (1) selon l'une quelconque des revendications précédentes, dans laquelle les conteneurs de transport sont dimensionnés pour permettre leur transport à travers le passage, et dans laquelle le système de transport (14, 30, 31, 32, 33, 34, 36) facilite le déplacement des conteneurs de transport à travers le passage de l'agencement de lacet (6).

7. Eolienne à rotors multiples (1) selon l'une quelconque des revendications précédentes, dans laquelle les conteneurs de transport (15) peuvent flotter.

8. Eolienne à rotors multiples (1) selon l'une quelconque des revendications précédentes, dans laquelle les conteneurs de transport (15) sont pourvus d'un code lisible par machine, et dans laquelle des informations concernant le contenu et la position des conteneurs de transport (15) peuvent être fournies à une unité de commande en lisant le code lisible par machine.

9. Eolienne à rotors multiples (1) selon l'une quelconque des revendications précédentes, dans laquelle chaque conteneur de transport (15) présente une taille et une forme qui garantissent que le conteneur de transport (15) peut passer de la partie intérieure inférieure de la tour (2) à une unité de génération d'énergie (4) donnée au moyen du système de transport (14, 30, 31, 32, 33, 34, 36).

10. Procédé de réalisation de maintenance sur une éolienne à rotors multiples (1) selon l'une quelconque des revendications précédentes, le procédé comprenant les étapes consistant à :
- conditionner l'équipement (26) dans deux conteneurs de transport (15) ou plus, sur la base d'un type de maintenance à réaliser,
- déplacer les conteneurs de transport (15) jusqu'à un site de l'éolienne à rotors multiples (1),
- déterminer une séquence de transport des conteneurs de transport (15), sur la base du contenu des conteneurs de transport (15), et correspondant à un ordre dans lequel il est nécessaire de recevoir le contenu des conteneurs de transport (15) au niveau d'une unité de génération d'énergie (4),
- transporter les conteneurs de transport (15) depuis une partie intérieure inférieure de la tour (2) jusqu'à une unité de génération d'énergie (4) de l'éolienne à rotors multiples (1) au moyen du système de transport (14, 30, 31, 32, 33, 34, 36) de l'éolienne à rotors multiples (1), et conformément à la séquence de transport déterminée, et
- réaliser une maintenance au niveau de l'unité de génération d'énergie (4), à l'aide de l'équipement (26) contenu dans les conteneurs de transport (15).

11. Procédé selon la revendication 10, comprenant en outre les étapes consistant à :
- après l'étape de réalisation de maintenance au niveau de l'unité de génération d'énergie (4), conditionner l'équipement (26) dans les deux conteneurs de transport (15) ou plus, et
- transporter les conteneurs de transport (15) depuis l'unité de génération d'énergie (4) jusqu'à la partie intérieure inférieure de la tour (2) au moyen du système de transport (14, 30, 31, 32, 33, 34, 36).
